# EUROPEAN PATENT APPLICATION

(11) **EP 1 768 031 A1**
(43) Date of publication of application: **28.03.2007**
(21) Application number: 04747296.4
(22) Date of filing: 09.07.2004
(51) Int. Cl.: G06F 15/00

(54) **UNAUTHORIZED CONNECTION DETECTION SYSTEM AND UNAUTHORIZED CONNECTION DETECTION METHOD**

(71) Applicant: Intelligent Wave Inc., Tokyo 104-0033 (JP)
(72) Inventor: AOKI, Osamu, 1403 CLIO REMINGTON HOUSE ASAGAYA, Tokyo 1660004 (JP); KAWANO, Hiroaki, 2610003 (JP)
(74) Representative: Grünecker, Kinkeldey, Stockmair & Schwanhäusser Anwaltssozietät
(86) International application number: PCT/JP2004/009828
(87) International publication number: WO 2006/006217

(57) **Abstract**

An unauthorized connection detection system is provided for detecting and addressing unauthorized connection to the network of an improper terminal device without having connection authority by such as spoofing by rewriting an IP address or a MAC address. The terminal device having the connection authority to the network has a dedicated monitoring program product stored therein, to transmit a notification when the connection to the network is started or scheduled correspondence while connected to the network. When a connection startup notification or the scheduled correspondence is not received from the monitoring program product while the connection to the network is permitted by verification of such as the IP address, due to the terminal device unauthorizedly connected by spoofing not being provided with the monitoring program product, processing for interrupting communication of the terminal device is performed.

## Description

### TECHNICAL FIELD

The present invention relates to an unauthorized connection detection system and an unauthorized connection detection method for detecting an unauthorized connection to a network by an unauthorized terminal device without having connection authority.

### BACKGROUND ART

Primary issues in management of important information in a closed network, such as an intra-company LAN, include not only prevention of unauthorized intrusion from outside the network, but also establishment of measures against taking-out of the information by unauthorized operation within the network. When the unauthorized taking-out of the information is carried out, using a terminal which is properly connected to the network may lead to a trace of the unauthorized operation being left or an unauthorized operator being specified, so that the terminal owned by the unauthorized operator is connected to the network for the unauthorized taking-out of the information.

In order to address such unauthorized operation, a management server is provided in the network for specifying the terminal connected to the network, with identification information on the terminal permitted to connect to the network stored therein. When the terminal is connected to the network, the identification information on the terminal is acquired to verify its connection authority to the network and then, if the terminal without having the connection authority is connected to the network, the unauthorized operation of the terminal is interrupted. The identification information for specifying the terminal connected to the network includes an IP address and an MAC address which are generally assigned to the terminal.

As a method of acquiring the IP address or the MAC address which is assigned to the terminal to determine whether the terminal is proper, there are disclosed a method of transmitting a broadcasting signal which contains the IP address or the MAC address from the terminal when the terminal is activated to start connecting to the network to thereby check the address with that stored in the management server which has received the signal (for example, see Patent Document 1), and a method of acquiring the MAC address using an ARP with the IP address as a key to thereby check a combination of the IP address and the MAC address with that stored in the management server (for example, see Patent Document 2).
Patent Document 1: Japanese Unexamined Patent Publication (Kokai) No. 6-334671
Patent Document 2: Japanese Unexamined Patent Publication (Kokai) No. 2000-201143

### DISCLOSURE OF INVENTION

### PROBLEM TO BE SOLVED BY THE INVENTION

When the terminal without having the connection authority is connected to the network by the above-mentioned method, the unauthorized connection can be detected by detecting the IP address or the MAC address which is not stored in the management server, and measures, such as disconnection from the network or the like may be taken against it. However, the method is efficient only where the IP address or the MAC address is associated with each terminal, so that the unauthorized connection cannot be detected if the IP address or the MAC address has been rewritten.

An example of the actual unauthorized connection includes a case where the terminal having the connection authority is disconnected from the network while another unauthorized terminal is brought in for the unauthorized connection, so as to "spoof" the authorized terminal by rewriting the IP address or the MAC address of the unauthorized terminal to the IP address or the MAC address of the terminal having the connection authority for connecting to the network. If spoofing is implemented, the IP address or the MAC address in itself to be used has the proper connection authority, leading to a problem that the unauthorized connection cannot be found.

In order to prevent leakage of the information resulting from the spoofing, other methods may be combined, such as tightening access authorization to the terminal in which the important information is stored. However, controlling the access to the terminal by a certain method may also lead to a problem that any packet sniffing cannot be detected once a status where the connected unauthorized terminal is present on the network is allowed. Accordingly, when the unauthorized terminal without having the connection authority is connected to the network, it is required to promptly detect and address any spoofing.

The present invention has been made to address the foregoing problems, and aims at providing an unauthorized connection detection system and an unauthorized connection detection method for detecting and addressing the unauthorized connection to the network when it is implemented by spoofing or the like, namely rewriting the IP address or the MAC address of the unauthorized terminal device without having the connection authority.

### MEANS FOR SOLVING THE PROBLEMS

In any embodiment of the present invention described hereinafter, a dedicated monitoring program product is stored in a proper terminal having connection authority to a network. The monitoring program product is configured to perform a predetermined operation to transmit predetermined information to a management server which manages the network when the terminal is connected to the network, allowing for detection of the connection with an unauthorized terminal without having the connection authority to the network depending on presence/absence or content of the information.

It should be noted that, in the following description, the network corresponds to a closed network, such as a LAN, where only the device having access authority is connectable thereto. While a terminal device generally corresponds to a computer such as a personal computer or the like, any device may be applied, such as a network device (for example, a router and a gateway), a server (for example, a Web server), and a mobile terminal (for example, a PDA) as long as it is connectable to the network.

According to a first aspect of the present invention for solving the problems, there is provided an unauthorized connection detection system for detecting an unauthorized connection to the network of the terminal device without having the connection authority, wherein a proper terminal device having the connection authority to the network has a monitoring program product stored therein for transmitting a connection startup notification, indicating that the connection to the network is started, to the unauthorized connection detection system when the terminal device is connected to the network, the system being provided with connected terminal detection means for detecting the terminal device connected to the network, connection startup notification reception means for receiving the connection startup notification transmitted from the monitoring program product stored in the proper terminal device, unauthorized connection determination means for, as to the terminal device detected to be newly connected to the network by the connected terminal detection means, determining that the terminal device is unauthorizedly connected to the network if the connection startup notification reception means does not receive the connection startup notification from the terminal device, and packet transmission means for, as to the terminal device determined to be unauthorizedly connected by the unauthorized connection determination means, transmitting a packet for inhibiting communication to the terminal device or a separate terminal device serving as a communication partner of the terminal device, or a packet for interrupting a session between the terminal device and the separate terminal device serving as the communication partner of the terminal device.

The first aspect of the present invention may also be configured as being provided with terminal information storing means for, as to the proper terminal device, storing first terminal information on at least one of proper identification information on the terminal device and information on a proper connection status to the network of the terminal device, and terminal information detection means for detecting second terminal information on at least one of the identification information on the terminal device and the information on the connection status to the network of the terminal device from the connection startup notification received by the connection startup notification reception means, wherein the monitoring program product detects and transmits current information on the terminal device to the unauthorized connection detection system as the connection startup notification, as to at least one of the identification information on the terminal device and the information on the connection status to the network of the terminal device, wherein the unauthorized connection determination means determines that the terminal device is unauthorizedly connected to the network if the second terminal information detected by the terminal information detection means does not correspond to the first terminal information on the terminal device stored in the terminal information storing means.

In the first aspect of the present invention, the monitoring program product transmits the connection startup notification when connected to the network, so that, if the management server does not receive the connection startup notification for the terminal verified to be connected to the network by such as the IP address, the monitoring program product which is supposed to be present in the terminal does not operate and thus it can be determined that the terminal is the improper terminal of which the IP address or the like has been rewritten.

In addition, it may be configured to verify whether the status of the terminal is normal to determine whether the connection is the unauthorized connection, by preliminarily storing the identification information on the terminal, such as the IP address or the MAC address, or the information on the connection status of the terminal, such as the IP address of a gateway server or a DHCP server, as to the proper terminal device having the connection authority in the management server, and receiving, as the connection startup notification, the identification information such as the IP address of the terminal when connected or the information on the connection status, such as the IP address of the gateway, as well for verification.

According to a second of the present invention for solving the problems, there is provided an unauthorized connection detection system for detecting the unauthorized connection to the network of the terminal device without having the connection authority, wherein the proper terminal device having the connection authority to the network has the monitoring program product stored therein for transmitting the information on the terminal device to the unauthorized connection detection system at predetermined intervals when the terminal device is connected to the network, the system being provided with the connected terminal detection means for detecting the terminal device connected to the network, terminal information reception means for receiving the information on the terminal device transmitted from the monitoring program product stored in the proper terminal device, the unauthorized connection determination means for, as to the terminal device detected to be connected to the network by the connected terminal detection means, determining that the terminal device is unauthorizedly connected to the network if the terminal information reception means does not receive the information on the terminal device at the predetermined intervals set up in the monitoring program product, and the packet transmission means for, as to the terminal device determined to be unauthorizedly connected by the unauthorized connection determination means, transmitting the packet for inhibiting the communication to the terminal device or the separate terminal device serving as the communication partner of the terminal device, or the packet for interrupting the session between the terminal device and the separate terminal device serving as the communication partner of the terminal device.

The second of the present invention may also be configured as being provided with, the terminal information storing means for, as to the proper terminal device, storing the first terminal information on at least one of the proper identification information on the terminal device and the information on the proper connection status to the network of the terminal device, and the terminal information detection means for detecting the second terminal information on at least one of the identification information on the terminal device and the information on the connection status to the network of the terminal device from the information on the terminal device received by the terminal information reception means, wherein the monitoring program product detects and transmits the current information on the terminal device to the unauthorized connection detection system as the information on the terminal device, as to at least one of the identification information on the terminal device and the information on the connection status to the network of the terminal device, wherein the unauthorized connection determination means determines that the terminal device is unauthorizedly connected to the network if the second terminal information detected by the terminal information detection means does not correspond to the first terminal information on the terminal device stored in the terminal information storing means.

In the second of the present invention, the monitoring program product transmits the information on the terminal at the predetermined intervals while connected to the network, so that, if the management server does not receive the information on the terminal at the predetermined intervals for the terminal verified to be connected to the network by such as the IP address, the monitoring program product which is supposed to be present in the terminal does not operate and thus it can be determined that the terminal is the improper terminal of which the IP address or the like has been rewritten.

In addition, it may be configured to verify whether the status of the terminal is normal to determine whether the connection is the unauthorized connection, by preliminarily storing the identification information on the terminal, such as the IP address or the MAC address, or the information on the connection status of the terminal, such as the IP address of the gateway server or the DHCP server, as to the proper terminal device having the connection authority in the management server, and receiving, as the information on the terminal, the identification information such as the IP address of the terminal when connected or the information on the connection status, such as the IP address of the gateway, as well for verification.

The first and the second aspects of the present invention may also be configured that, wherein the monitoring program product stored in the proper terminal device transmits an occurrence notification of a predetermined event to the unauthorized connection detection system when the event defined to be unauthorized operation is detected, wherein the unauthorized connection detection system is provided with occurrence notification reception means for receiving the occurrence notification of the event transmitted from the monitoring program product stored in the proper terminal device, wherein the unauthorized connection determination means determines that the terminal device is unauthorizedly connected to the network if the occurrence notification reception means receives the occurrence notification.

In this configuration, operation which may be the unauthorized operation, such as rewriting the IP address of the proper terminal device for spoofing, is preliminarily set as the event, and the program product for monitoring such operation is stored in the proper terminal device, allowing for performing a predetermined action.

According to a third aspect of the present invention for solving the problems, there is provided an unauthorized connection detection system for detecting the unauthorized connection to the network of the terminal device without having the connection authority, wherein the proper terminal device having the connection authority to the network has the monitoring program product stored therein for returning a predetermined response to a request from the unauthorized connection detection system, the system being provided with the connected terminal detection means for detecting the terminal device connected to the network, request transmission means for transmitting the request to the terminal device detected to be connected to the network by the connected terminal detection means, response reception means for receiving the response to the request transmitted from the monitoring program product stored in the proper terminal device, the unauthorized connection determination means for, as to the terminal device to which the request transmission means has transmitted the request, determining that the terminal device is unauthorizedly connected to the network if the response reception means does not receive the response to the request from the terminal device, and the packet transmission means for, as to the terminal device determined to be unauthorizedly connected by the unauthorized connection determination means, transmitting the packet for inhibiting the communication to the terminal device or the separate terminal device serving as the communication partner of the terminal device, or the packet for interrupting the session between the terminal device and the separate terminal device serving as the communication partner of the terminal device.

The third aspect of the present invention may also be configured as being provided with, the terminal information storing means for, as to the proper terminal device, storing the first terminal information on at least one of the proper identification information on the terminal device and the information on the proper connection status to the network of the terminal device, and the terminal information detection means for detecting the second terminal information on at least one of the identification information on the terminal device and the information on the connection status to the network of the terminal device from the response received by the response reception means, wherein the monitoring program product detects and transmits the current information on the terminal device to the unauthorized connection detection system as the response, as to at least one of the identification information on the terminal device and the information on the connection status to the network of the terminal device, wherein the unauthorized connection determination means determines that the terminal device is unauthorizedly connected to the network if the second terminal information detected by the terminal information detection means does not correspond to the first terminal information on the terminal device stored in the terminal information storing means.

In the third aspect of the present invention, although the management server transmits the predetermined request to the terminal device detected to be connected by such as the IP address and the proper terminal device having the connection authority returns the predetermined response to the request with the preliminarily stored monitoring program product, the terminal device which is unauthorizedly connected by such as spoofing cannot return the response due to the absence of such a monitoring program product and thus it can be determined that the terminal is the improper terminal of which the IP address or the like has been rewritten.

In addition, it may be configured to verify whether the status of the terminal is normal to determine whether the connection is the unauthorized connection, by preliminarily storing the identification information on the terminal, such as the IP address or the MAC address, or the information on the connection status of the terminal, such as the IP address of the gateway server or the DHCP server, as to the proper terminal device having the connection authority in the management server, and receiving, as the response from the terminal, the identification information such as the IP address of the terminal when connected or the information on the connection status, such as the IP address of the gateway, as well for verification.

The first through third aspects of the present invention may be specified as an unauthorized connection detection method, corresponding to the unauthorized connection detection system according to each invention, performed with each configuration of the unauthorized connection detection system.

In other words, the unauthorized connection detection method corresponding to the first aspect of the present invention is the unauthorized connection detection method for detecting the unauthorized connection to the network of the terminal device without having the connection authority, including the steps of activating connection processing to the network by the proper terminal device having the connection authority to the network, transmitting the connection startup notification, indicating that the connection to the network is started, to the management server of the network when the proper terminal device establishes the connection to the network, detecting the terminal device newly connected to the network by the management server, determining that the new terminal device is unauthorizedly connected to the network if the management server does not receive the connection startup notification within a predetermined period of time after detecting that the new terminal device is connected to the network, and transmitting the packet for inhibiting the communication to the terminal device or the separate terminal device serving as the communication partner of the terminal device, or the packet for interrupting the session between the terminal device and the separate terminal device serving as the communication partner of the terminal device, as to the terminal device determined to be unauthorizedly connected at the step above.

The unauthorized connection detection method corresponding to the second of the present invention is the unauthorized connection detection method for detecting the unauthorized connection to the network of the terminal device without having the connection authority, including the steps of activating the connection processing to the network by the proper terminal device having the connection authority to the network, transmitting the information on the terminal device at the predetermined intervals to the management server of the network when the proper terminal device establishes the connection to the network, detecting the terminal device connected to the network by the management server, determining that the new terminal device is unauthorizedly connected to the network if the management server does not receive the information on the terminal device at the predetermined intervals, as to the terminal device detected to be connected to the network by the management server, and transmitting the packet for inhibiting the communication to the terminal device or the separate terminal device serving as the communication partner of the terminal device, or the packet for interrupting the session between the terminal device and the separate terminal device serving as the communication partner of the terminal device, as to the terminal device determined to be unauthorizedly connected at the step above.

The unauthorized connection detection method corresponding to the third aspect of the present invention is the unauthorized connection detection method for detecting the unauthorized connection to the network of the terminal device without having connection authority, including the steps of detecting the terminal device connected to the network by the management server of the network, transmitting the predetermined request to the terminal device detected to be connected to the network by the management server, activating the monitoring program product for receiving the request and transmitting the response to the request by the proper terminal device having the connection authority to the network connected to the network, transmitting the response generated by the monitoring program product to the management server by the proper terminal device, determining that the new terminal device is unauthorizedly connected to the network if the management server does not receive the response within the predetermined period of time, as to the terminal device to which the management server has transmitted the request, and transmitting the packet for inhibiting the communication to the terminal device or the separate terminal device serving as the communication partner of the terminal device, or the packet for interrupting the session between the terminal device and the separate terminal device serving as the communication partner of the terminal device, as to the terminal device determined to be unauthorizedly connected at the step above.

### EFFECT OF THE INVENTION

Although an unauthorized connection cannot be addressed only by verifying assigned connection authority in a conventional manner using an IP address or a MAC address as a key when unauthorized connection to a network with an unauthorized terminal device without having the connection authority is carried out by such as spoofing an authorized terminal where the IP address or the MAC address has been rewritten.

### BEST MODES FOR CARRYING OUT THE INVENTION

The best modes for carrying out the present invention will be described hereinbelow using the drawings. Although there will be primarily described below about embodiments of spoofing by rewriting an IP address, the present invention is not limited to such embodiments.

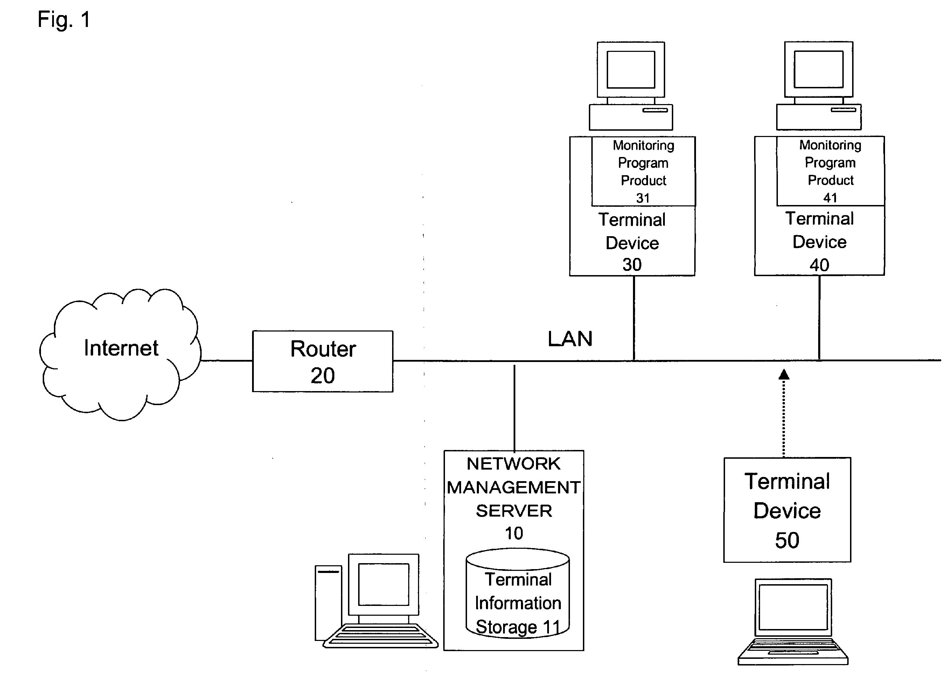

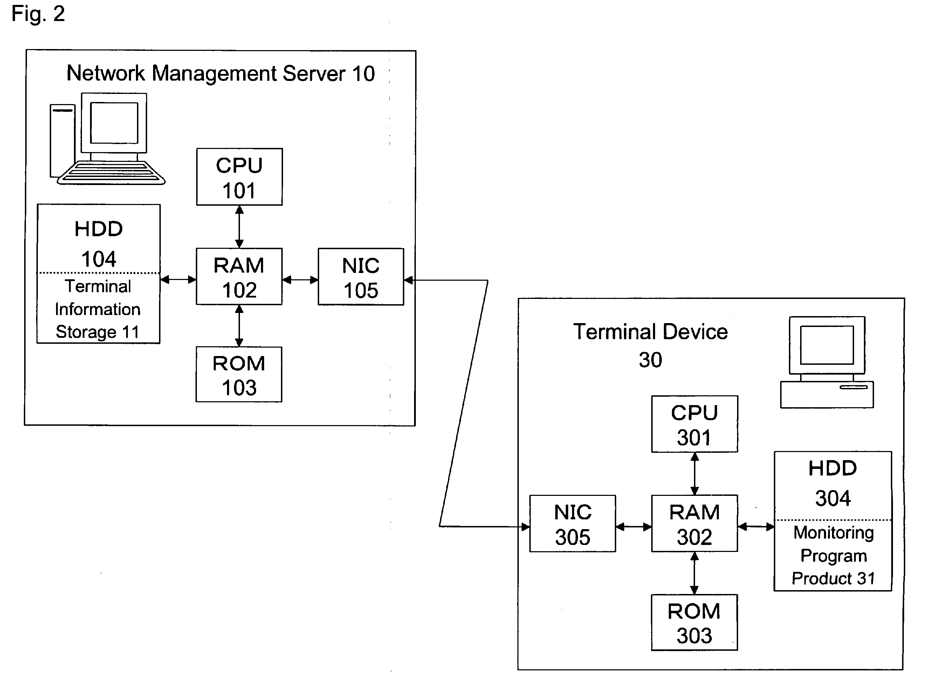

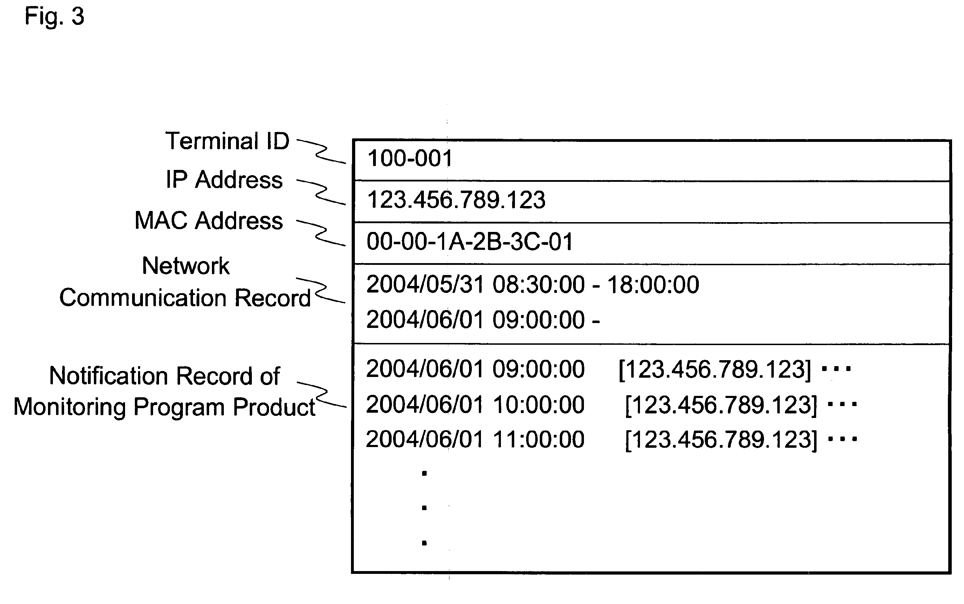

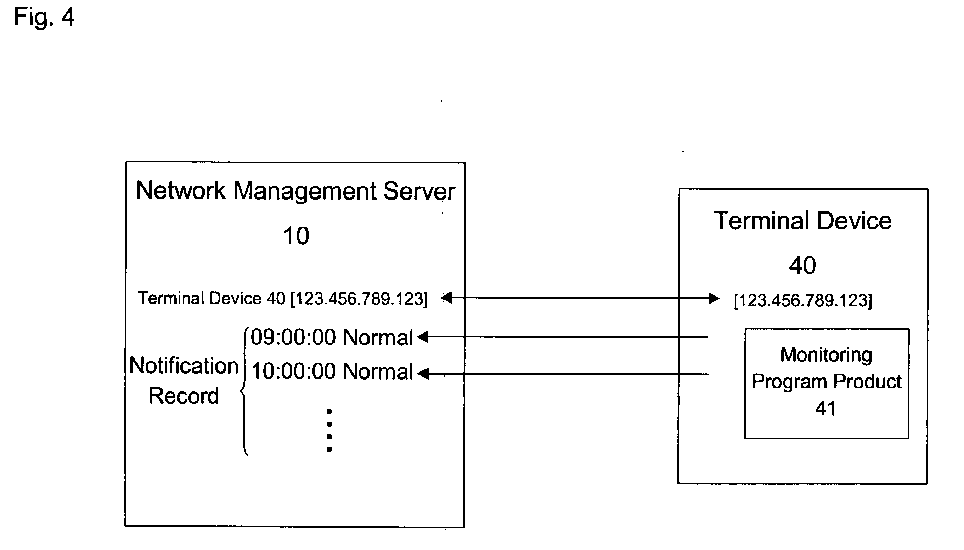

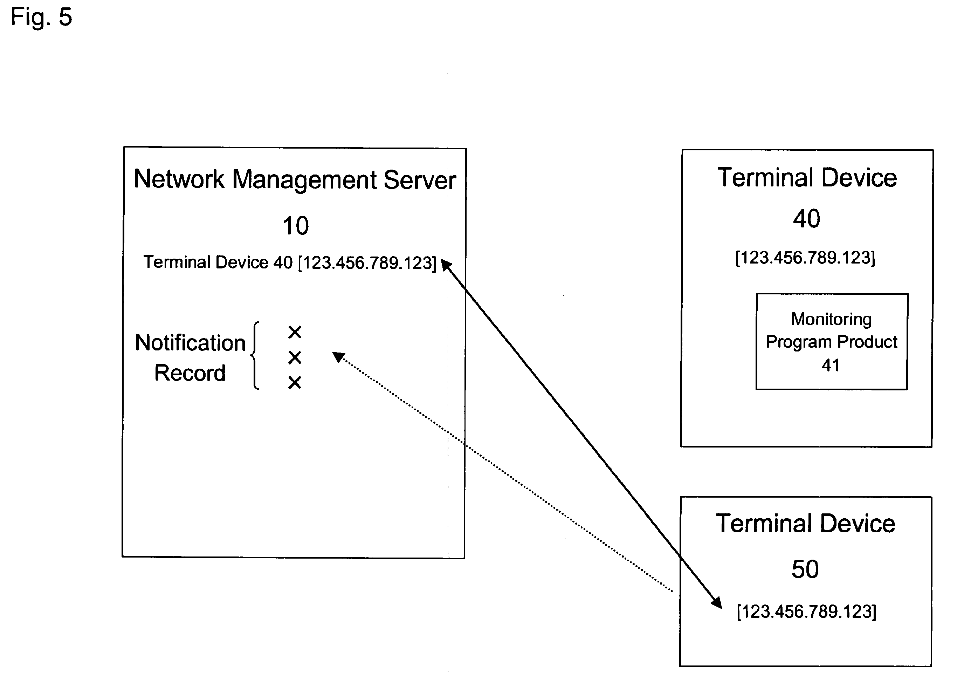

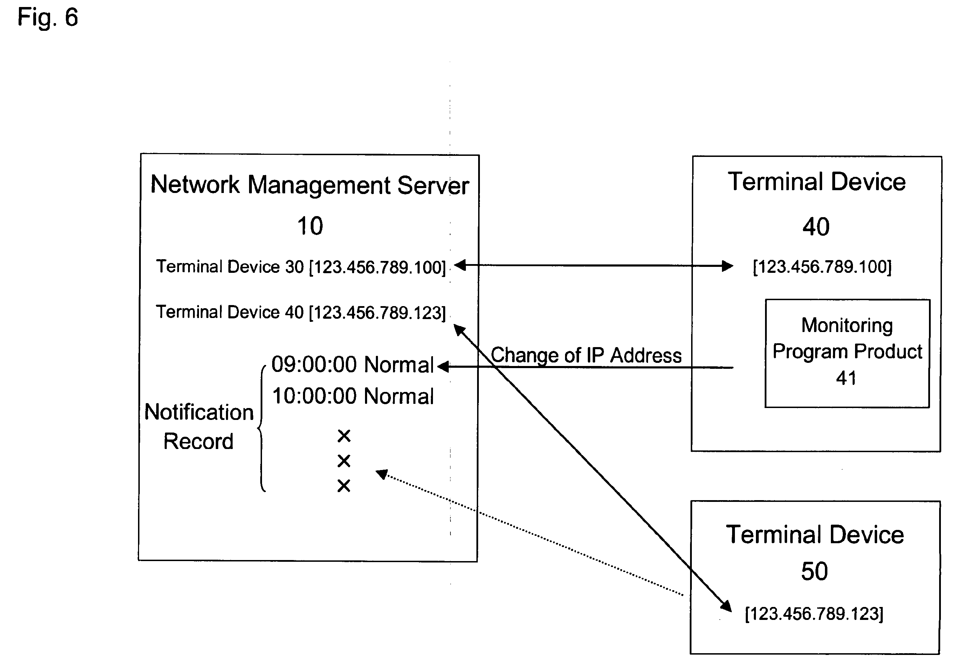

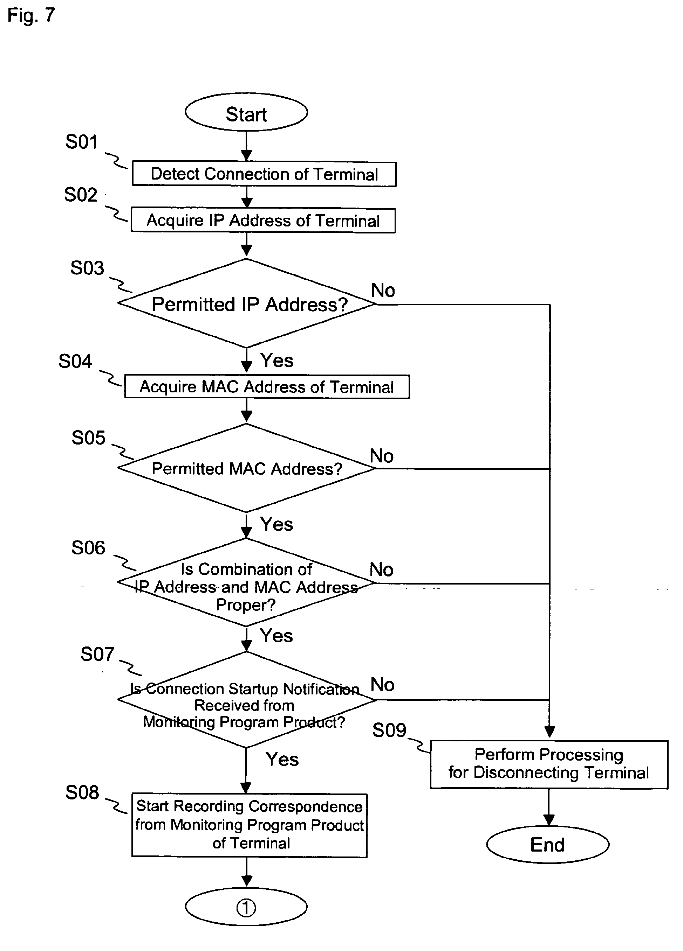

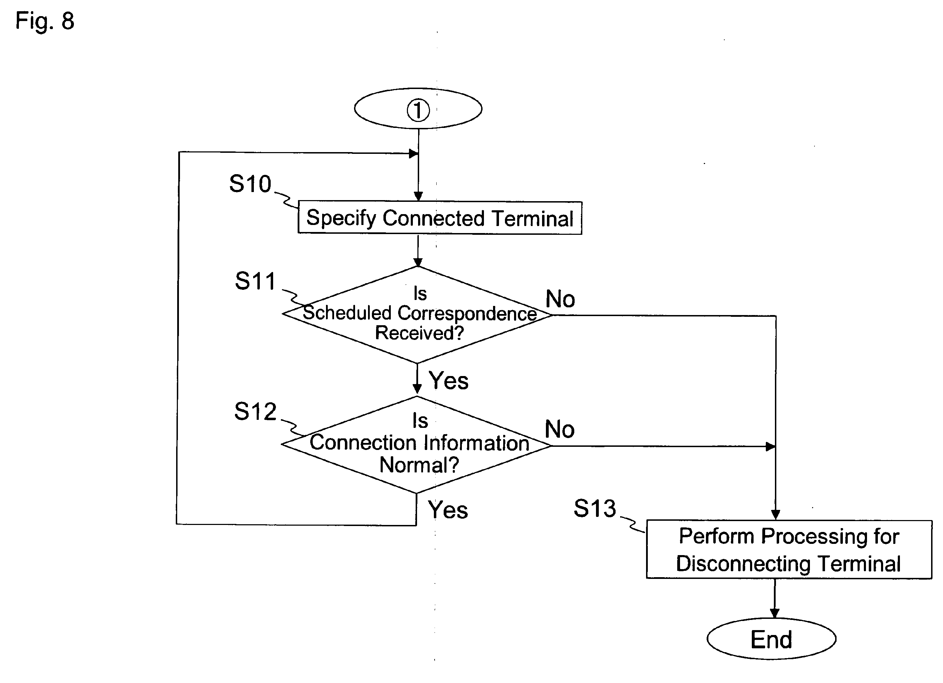

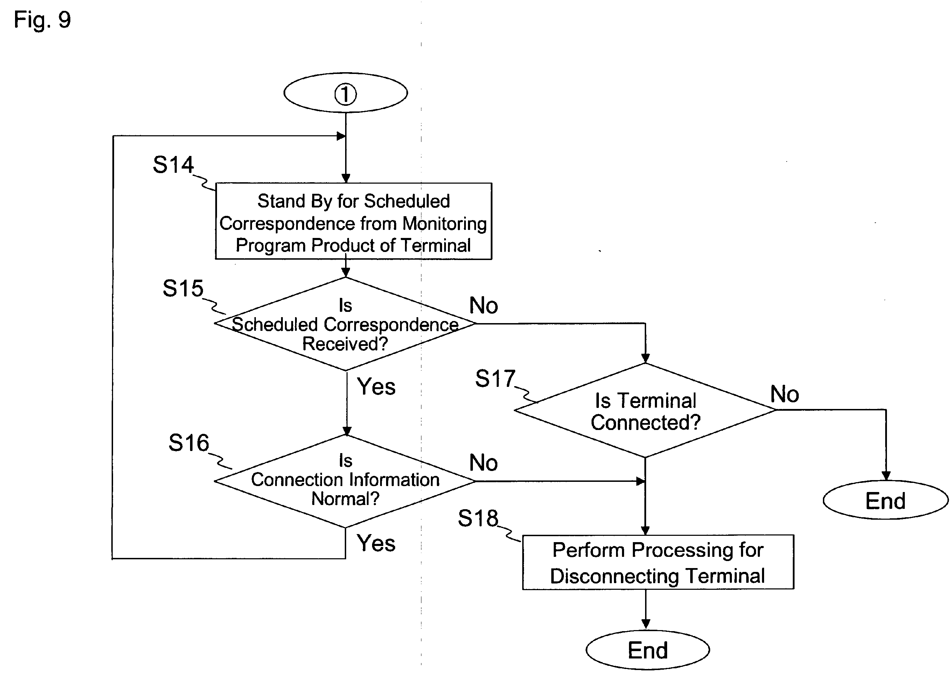

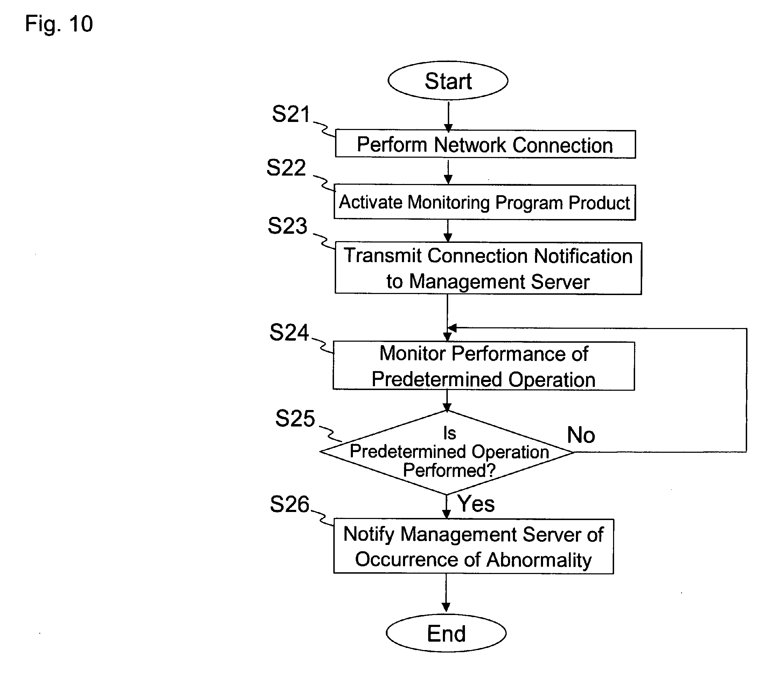

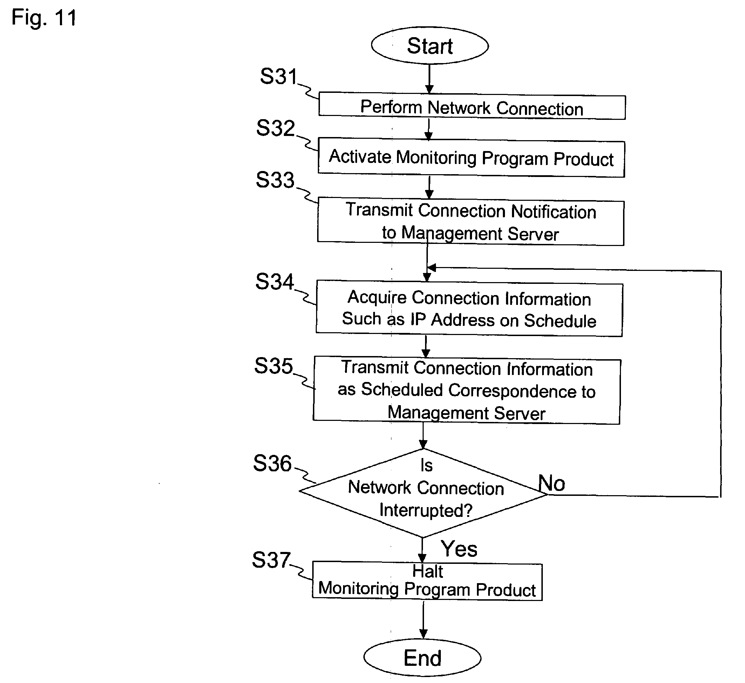

FIG. 1 illustrates an example of a setup of an unauthorized connection detection system according to the present invention. FIG. 2 is a block diagram illustrating a configuration of a network management server and a terminal device used for the unauthorized connection detection system according to the present invention. FIG. 3 illustrates an example of notification record from a proper terminal recorded on the unauthorized connection detection system according to the present invention. FIG. 4 illustrates an example of operation of the management server when a proper terminal device having connection authority is connected in the unauthorized connection detection system according to the present invention. FIG. 5 illustrates a first example of the operation of the management server when the unauthorized terminal device without having the connection authority is connected in the unauthorized connection detection system according to the present invention. FIG. 6 illustrates a second example of the operation of the management server when the unauthorized terminal device without having the connection authority is connected in the unauthorized connection detection system according to the present invention. FIG. 7 is a flow chart illustrating a flow of the management server when the terminal is activated in the unauthorized connection detection method according to the present invention. FIG. 8 is a flow chart illustrating a first monitoring flow of the management server that receives scheduled correspondence from the terminal in the unauthorized connection detection method according to the present invention. FIG. 9 is a flow chart illustrating a second monitoring flow of the management server that receives the scheduled correspondence from the terminal in the unauthorized connection detection method according to the present invention. FIG. 10 is a flow chart illustrating a first flow of a monitoring program product of a terminal side in the unauthorized connection detection method according to the present invention. FIG. 11 is a flow chart illustrating a second flow of the monitoring program product of the terminal side in the unauthorized connection detection method according to the present invention.

Referring to FIG. 1, the unauthorized connection detection system according to the present invention is provided in a network management server 10 which monitors a closed network at the inside of a router 20. The network management server 10 stores, for example, identification information, such as the IP address or a MAC address, on proper terminal devices 30, 40 having connection authority to the network, and terminal information on a connection status to the network or the like, such as the IP address of a gateway or a DHCP server, in a terminal information storage 11.

Although the network management server 10 detects the terminal device connected to the network at predetermined intervals to compare the status thereof with the general status stored in the terminal information storage 11 or to write history information including the connection status into the terminal information storage 11, such functions may be achieved by a computer which is physically the same as the network management server 10 operating as the unauthorized connection detection system according to the present invention or by two or more separate computers. As for particularly the former function, it is possible to use the network management server generally used.

In addition, while the terminal device which the information thereon is stored in the terminal information storage 11 is generally the computer operated by a user utilizing the network, any node connected within the closed network, for example, the router, the DHCP server, and a Web server, may be applied.

The proper terminal devices 30, 40 having the connection authority to the network have monitoring program products 31, 41, respectively, used for such as monitoring unauthorized connection within the network, stored therein. The monitoring program products 31, 41 are provided other than general program products for network connection contained in an operating system or the like of the computer, and installed only in the proper terminal devices 30, 40. Therefore, a terminal device 50 without having the connection authority to the network, which is brought in unauthorizedly by spoofing, does not have the monitoring program product stored therein.

Accordingly, by the monitoring program products 31, 41 causing the network management server 10 to perform operations, such as transmission of a connection startup notification to the network management server 10 when connected to the network and periodical transmission of the information in the terminal device to the network management server during connected to the network, the network management server 10 will receive such notifications regarding the terminal device which is detected to be connected to the network at the network management server 10. The notifications transmitted from the monitoring program products 31, 41 may be a response to a request from the network management server 10. If the network management server 10 does not receive the notification or the like from the terminal device while it is connected to the network, it is presumed that the monitoring program product is not installed therein, so that it can be determined that the terminal device is unauthorizedly connected to the network by spoofing or the like.

In describing this configuration more specifically, the network management server 10 and the proper terminal device 30 are configured as in FIG. 2. Referring to FIG. 2, the network management server 10 is configured by a single computer provided with the terminal information storage 11. When the network management server 10 is activated, various basic program products for hardware control, such as input control and output control, stored in a ROM 103 are activated while the operating system of the computer is read from an HDD 104 to start monitoring the network. Then, the program product for performing the detection operation of the unauthorized connection to the network is read from the HDD 104, and a RAM 102 is caused to serve as a work area while a CPU 101 performs data processing to perform monitoring the network.

Meanwhile, when the proper terminal device 30 is activated, various basic program products for hardware control, such as input control and output control, stored in a ROM 303 are activated while the operating system of the computer is read from an HDD 304. Then, the monitoring program product 31 stored for detection of the unauthorized connection to the network is read from the HDD 304, and a RAM 302 is caused to serve as the work area while a CPU 301 performs data processing to perform a predetermined operation for the network management server 10, such as transmission of the connection startup notification, defined by the monitoring program product 31.

For example, if the monitoring program product 31 is set up to transmit the connection startup notification when connected to the network and a connection notification at the predetermined intervals thereafter, the RAM 302 and the CPU 301 performs data processing when the connection is started or at predetermined time while an NIC (network interface card) 305 transmits data, such as the connection startup notification, to the network management server 10 via a LAN. The network management server 10 receives the data by means of the NIC 105 and causes the RAM 102 and the CPU 101 to interpret the received data through data processing, so as to record the reception of such as the connection startup notification on the terminal information storage 11 of the HDD 104. Since such data is not transmitted to the network management server 10 if the monitoring program product is not stored in the HDD, the network management server 10 can detect the unauthorized connection to the network from absence of the reception of the connection startup notification or the like.

FIG. 3 illustrates an example of a table of the notification record, provided for each proper terminal, which is recorded on the terminal information storage 11 of the network management server 10, in the unauthorized connection detection system according to the present invention. Referring to FIG. 3, a terminal ID is provided to each terminal device having the connection authority to the network, and the identification information for specifying the terminal device, i.e., the IP address and the MAC address, is recorded on the table provided for each terminal ID. The connection record to the network of the terminal device and the notification record from the monitoring program product provided for the terminal are also recorded.

Among these, the identification information on the terminal, i.e., the IP address and the MAC address, can be used as the key to determine the connection authority of the terminal device connected to the network. In other words, when the network management server 10 detects that the terminal device is newly connected to the network, it acquires the IP address or the MAC address of the terminal device to compare with the IP address or the MAC address of the proper terminal device which is recorded on the terminal information storage 11 as having the connection authority. If the identical IP address or MAC address is not present, the terminal device may be that without having the connection authority, so that the network management server 10 performs certain processing for disconnecting it from the network.

Note that the above-described determination with the IP address or the MAC address may use either one as the key, or alternatively, it may condition that a combination of both addresses corresponds to that of the proper terminal device. In addition, such determination of the connection authority by acquiring the IP address or the MAC address from the terminal device which is connected to the network may be operated by the computer, other than the network management server 10, using the functions of the operating system or the like, or may be performed by the network management server 10 along with the unauthorized connection detection system according to the present invention.

Although the connection record to the network includes a past log in FIG. 3, such log is not essential. In order to operate the unauthorized connection detection system according to the present invention, it is sufficient that the information is recorded, which allows for determining whether the terminal device specified by such as the terminal ID or the IP address is connected to the network, and a flag or the like which indicates that the terminal device is connected to the network may be used.

Although the notification record from the monitoring program product includes the past log in FIG. 3, such log is not essential. By recording only the information on the current notification record to measure elapsed time therefrom for example, it is sufficient that the notification records are verified to be received at the predetermined intervals during connected to the network. In addition, although the information such as the IP address on the terminal device upon response is recorded as well in FIG. 3, recording the identification information or the information on the connection status of the terminal device as well in this manner allows for performing verification of presence/absence of the response, as well as detection of any change in the terminal device, for example, the IP address has been rewritten, to specify the unauthorized operation.

Referring now to FIGS. 4 to 6, there is described the operation of the network management server 10 in the unauthorized connection detection system according to the present invention. FIG. 4 illustrates an example where the proper terminal device having the connection authority is connected, while FIGS. 5 and 6 illustrate examples where the improper terminal device without having the connection authority is connected.

In FIG. 4, when the proper terminal device 40 having the connection authority to the network is turned on, the operating system of the terminal device 40 is then activated to perform connection processing to the network. If the personal computer or the like is used for the terminal device 40, the operating system generally collects the information on the node in the network, such as the router, the gateway, and a file server, to comprehend the connection status to the network.

Meanwhile, the network management server 10 also detects the node connected to the network as needed to collect the information, such as the IP address, and comprehend the node connected to the network. In addition, the identification information, such as the IP address, on the terminal device having the connection authority to the network is recorded on the network management server 10, so that the network management server 10 can detect any connection to the network of the terminal device without having the connection authority by comparing the IP address or the like of the terminal device detected to be connected to the network with the IP address or the like of the terminal device having the connection authority.

In FIG. 4, the network management server 10 detects that the terminal device 40 is connected to the network and acquires the IP address [123.456.789.123] from the terminal device 40. Meanwhile, it is recorded on the network management server 10 that the terminal device 40 has the connection authority to the network and the IP address thereof is [123.456.789.123], which corresponds to the IP address acquired from the terminal device 40, so that it can be verified that the terminal device 40 is the terminal device having the connection authority.

The terminal device 40 having the connection authority to the network has the dedicated monitoring program product 41 used for detecting the unauthorized connection to the network stored therein. When the terminal device 40 is turned on and the operating system thereof is activated, the monitoring program product 41 is also activated to transmit a unique signal which notifies that the connection to the network is started to the network management server 10. In other words, when the proper terminal device having the connection authority to the network is connected to the network, the network management server 10 certainly receives the signal unique to the monitoring program product, which notifies that the connection is started. Assume that the connection to the network is started at 9:00 in FIG. 4, the first notification from the monitoring program product is received at 9:00, so that it can be verified that the terminal device connected to the network is certainly the terminal device 40 having the connection authority to the network.

In addition, the monitoring program product 41 periodically transmits the unique signal which notifies that the connection is continued to the network management server 10 while the terminal device 40 is connected to the network. Transmission of such a signal may be configured that the network management server 10 side transmits the request, which is respondable only by the monitoring program product 41, to the connected terminal at the predetermined intervals and receives the response from the monitoring program product 41. In either methods, while the proper terminal device having the connection authority to the network is connected to the network, the network management server 10 certainly receives the signal unique to the monitoring program product, which notifies that the connection is continued. Since it is recorded that the notification is normally received at 10:00, one hour later than 9:00 when the connection to the network is started, in FIG. 4, so that it can be verified that the terminal device 40 having the connection authority to the network is continuously connected to the network in the normal status.

Note that the above-described notification which indicates that the connection may contain the information on the current status of the terminal device 40 for comparing with the normal status stored in the network management server 10. For the current status of the terminal device 40, it may be used the identification information on the terminal, such as the IP address or the MAC address, as well as the information on the connection status of the terminal, such as the IP address of the gateway or the DHCP server. When such information does not correspond to that of the normal status, for example, the IP address or the MAC address does not correspond to that of the normal status, the address may have been rewritten, so that it can be determined that the unauthorized operation has been performed.

In FIG. 5, a terminal device 50 does not have the connection authority to the network, but intends to connect to the network by spoofing by rewriting the IP address. In order to spoof the proper terminal device 40 having the connection authority, the IP address has been rewritten to the IP address [123.456.789.123] of the terminal device 40. Since the terminal device 50 is not the proper terminal device having the connection authority to the network, the dedicated monitoring program product is not stored therein. When the terminal device 50 is turned on, the operating system of the terminal device 50 is then activated to perform the connection processing to the network.

The network management server 10 detects that the terminal device 50 is connected to the network and acquires the IP address [123.456.789.123] from the terminal device 50. Meanwhile, the IP address [123.456.789.123] is recorded on the network management server 10 as the IP address of the terminal device having the connection authority to the network, which corresponds to the IP address acquired from the terminal device 50, so that it is improperly verified that the terminal device 50 is the proper terminal device having the connection authority to the network only from the determination by means of the IP address.

Even when the connection to the network is started, the unique signal which notifies that the connection is started is not transmitted because the terminal device 50 is not provided with the dedicated monitoring program product. Accordingly, the connection notification is not recorded in contrast to the fact that the terminal device 40 is in the connected status to the network in the network management server 10, so that it can be determined that the improper terminal device without having the connection authority other than the terminal device 40 is connected to the network by spoofing the terminal device 40.

In addition, while the connection is continued as well, the unique signal for notifying that the connection is continued, which is periodically transmitted from the proper terminal device, is not transmitted because the dedicated monitoring program product is not provided. In contrast, the terminal device 40 is in the connected status to the network in the network management server 10, so that it can also be determined that the improper terminal device without having the connection authority is connected to the network by spoofing the terminal device 40 from the fact that such notification is not received.

FIG. 6 illustrates an example, in the case of FIG. 5, where the IP address of the terminal device 40 is rewritten to a different address in order for the terminal device 50 to spoof the terminal device 40. The connection is normally started when the terminal device 40 is activated, and the connection startup notification from the monitoring program product 41 or the information from the terminal while the connection is continued is transmitted. Although the network management server 10 determines that the connection is normal from such a status, assume that the IP address of the terminal device 40 has been rewritten to the IP address [123.456.789.100] of another terminal device 30 having the connection authority for spoofing by the terminal device 50. When the terminal device 50 uses the IP address [123.456.789.123] for connection, the information on the terminal while the connection is continued, for example, is transmitted from the monitoring program product 41, so that spoofing may not be detected.

Accordingly, it is preferred to set up the monitoring program product 41 to perform notification processing to the network management server 10 when the predetermined operation relevant to spoofing, such as change of the IP address or the MAC address, is performed. With set up in this manner, the monitoring program product 41 transmits the unique signal to the network management server 10, which notifies that the IP address of the terminal device 40 has been rewritten, if it occurs, so that the network management server 10 can detect that a certain unauthorized operation may have been performed for the terminal device 40. It is also preferred to set up the monitoring program product 41 to perform an action at the terminal device 40, such as prohibition to use the network, because it allows for performing the disconnection operation with the network from the terminal device 40 side.

When determined that the terminal connected to the network is the improper terminal device without having the connection authority as a result of the example of FIG. 5 or FIG. 6, the network management server 10 performs processing for interrupting communication of the terminal device 50. Specifically, if a TCP session is established between the terminal device 50 and the terminal serving as a communication partner, for example, the session can be interrupted by transmitting a reset packet or an end packet to the session.

Alternatively, it may be avoided that a transmitted packet from the terminal device 50 reaches the terminal serving as the communication partner by transmitting a spoof ARP redirection packet to the terminal device 50. The communication between the terminal device 50 and the terminal serving as the communication partner may be inhibited by transmitting the spoof ARP redirection packet to the terminal serving as the communication partner of the terminal device 50.

For the interruption processing of the communication described above, the network management server 10 may perform other operations, such as transmitting a mail to an administrator, or recording the log regarding the unauthorized operation or the action taken therewith.

Next, the flows of the unauthorized connection detection method according to the present invention are described using the flow charts of FIGS. 7 to 11. FIGS. 7 to 9 illustrate the flow at the network management server side, wherein FIG. 7 illustrates the flow when the terminal device is activated while FIGS. 8 and 9 illustrate two kinds of patterns of the flow at the network management server that receives the scheduled correspondence from the terminal device. FIGS. 10 and 11 illustrate two kinds of patterns of the flow of the monitoring program product at the terminal device side.

Referring to FIG. 7, there is described the flow at the network management server side when the terminal device is activated to connect to the network. If a certain terminal device is activated to connect to the closed network, the network management server detects that the terminal device is newly connected (S01), and specifies the IP address of the terminal device (S02). The network management server preliminarily stores the IP address of the terminal device which is permitted to connect to the network, so that it may transmit a ping by addressing the IP address to receive the response, or alternatively, it may use network monitoring technique or other techniques generally used in the operating system of the computer. Accordingly, the method of detecting the terminal device connected to the network to specify the IP address thereof is not limited specifically. For example, snooping means for sniffing the packet on the network may be used to monitor all the packets transmitted on the network and acquire the information on such as a transmission source IP address, a transmission destination IP address, a transmission source MAC address (the MAC address of the transmission source terminal if it is in an identical segment or of the router if it is in a different segment), and a transmission destination MAC address for the respective received packets.

If the connection of the new terminal device is detected and the ping is transmitted by addressing the permitted IP address, it is determined whether the IP address of the terminal device corresponds to that preliminarily permitted by the presence of the response to the ping (S03). In other words, it is determined that the IP address is the permitted IP address when the ping is responded to, or that the terminal device with the unpermitted IP address is connected when there is no response. If the IP address is not the permitted one, processing for interrupting the communication of the terminal device is performed, such as transmission of the spoof ARP redirection packet (S09).

Subsequently, the MAC address of the newly connected terminal device is acquired (S04). If the MAC address cannot specified directly, it may be specified from the IP address using the ARP. The network management server preliminarily stores the MAC address of the terminal device which is permitted to connect to the network, and it is verified whether the MAC address acquired from the newly connected terminal device is that having the connection authority by referring to the table on which the permitted MAC address is stored (S05). If the MAC address is not the permitted one, processing for interrupting the communication of the terminal device is performed, such as transmission of the spoof ARP redirection packet (S09).

The network management server may preliminarily store the combination of the IP address and the MAC address of the terminal device which is permitted to connect to the network. In this case, it is verified whether the combination of the IP address and the MAC address acquired from the newly connected terminal device is that having the connection authority by referring to the table on which the combination of the permitted IP address and MAC address is stored (S06). If the combination of the IP address and the MAC address is not the permitted one, processing for interrupting the communication of the terminal device is performed, such as transmission of the spoof ARP redirection packet (S09).

Although the flow so far is used in the general network monitoring, the present invention is premised on that the terminal device connected to the network has been specified using the identification information such as the IP address as the key by the flow described above in order to identify the terminal device connected to the network. Accordingly, as long as it can specify the terminal device connected to the network, either of or the combination of the IP address and the MAC address or other identification information identifiable of the terminal device may be used for specification.

Subsequently, after it is verified that the combination of the IP address and the MAC address is permitted, it is verified whether the connection startup notification from the monitoring program product is received from the terminal device (S07). Since the monitoring program product is stored only in the proper terminal device having the connection authority, the connection startup notification is not received if the IP address or the MAC address is spoofed. Accordingly, if the connection startup notification is not received within a predetermined period of time, it is determined that spoofing may be performed, and processing for interrupting the communication of the terminal device is performed, such as transmission of the spoof ARP redirection packet (S09).

In contrast, if the connection startup notification is received, it is determined that the terminal device is the proper terminal device having the connection authority to allow the connection to the network, and it is started to record the scheduled correspondence from the monitoring program product stored in the terminal device in order to monitor that the unauthorized operation is not performed while the terminal device is connected to the network (S08).

The determination by the network management server of the unauthorized operation by reception of the scheduled correspondence from the monitoring program product stored in the terminal device is performed as illustrated in FIG. 8 or 9. FIG. 8 illustrates the pattern where the terminal connected to the network is specified first, wherein the terminal device connected within the network is specified by acquiring such as the IP address (S10) and then it is verified whether the scheduled correspondence is received from the respective terminal devices at predetermined timing (S11).

The scheduled correspondence is transmitted by activating the monitoring program product stored only in the proper terminal device having the connection authority. Therefore, if the scheduled correspondence is not received at the predetermined timing while the terminal device is determined to be connected to the network from such as the IP address, the unauthorized connection may be performed by spoofing such as the IP address. Accordingly, if the scheduled correspondence is not received at the predetermined timing, it is determined that spoofing may be performed, and processing for interrupting the communication of the terminal device is performed, such as transmission of the spoof ARP redirection packet (S13).

In contrast, if the scheduled correspondence is received, it is detected the identification information, such as the IP address or the MAC address, transmitted from the terminal device or the information on the connection status to the network, such as the IP address of a gateway server or the DHCP server, contained in the scheduled correspondence, and determined whether such current information corresponds to the general connection information preliminarily stored in the network management server (S12). If any abnormality occurs in the connection information, it is determined that any unauthorized operation may be performed to the connection status of the terminal device, and processing for interrupting the communication of the terminal device is performed, such as transmission of the spoof ARP redirection packet (S13). If there is no abnormality in the connection information, monitoring is continued.

FIG. 9 illustrates the pattern where the scheduled correspondence is verified first. The network management server stands by for reception of the scheduled correspondence transmitted from the terminal device connected to the network at the predetermined timing (S14), and it verifies whether the scheduled correspondence is received when the predetermined timing comes (S15). In order to receive the scheduled correspondence at the predetermined timing, a program product for performing the scheduled correspondence may be contained in the monitoring program product stored only in the proper terminal device having the connection authority, or the network management server transmits the request respondable only by the monitoring program product at the predetermined timing and receives the scheduled correspondence as the response from the monitoring program product.

If the scheduled correspondence is received, it is detected the identification information, such as the IP address or the MAC address, transmitted from the terminal device or the information on the connection status to the network, such as the IP address of the gateway server or the DHCP server, contained in the scheduled correspondence, and determined whether such current information corresponds to the general connection information preliminarily stored in the network management server (S16). If any abnormality occurs in the connection information, it is determined that any unauthorized operation may be performed to the connection status of the terminal device, and processing for interrupting the communication of the terminal device is performed, such as transmission of the spoof ARP redirection packet (S18). If there is no abnormality in the connection information, monitoring is continued.

In contrast, if the scheduled correspondence is not received, it is verified whether the terminal device is connected to the network (S17). Whether the terminal device is connected may be verified by referring to the data managed by a separate network monitoring system, or by transmitting the ping or the like. If the terminal device is not connected, it can be determined that the operation is already terminated, for example, the terminal device is turned off, so that monitoring is terminated. If the terminal device is connected, it is determined that spoofing may be performed because the scheduled correspondence is not transmitted while being connected suggests the possibility that the improper terminal device without the monitoring program product may be connected, so that processing for interrupting the communication of the terminal device is performed, such as transmission of the spoof ARP redirection packet (S18).

Referring to the flow chat of FIG. 10, there is described the flow of the monitoring program product of the terminal device side transmitting the connection startup notification to the network management server when the connection to the network is started and transmitting the notification as well when a predetermined event occurs thereafter. First, when the terminal device is activated to perform the connection processing to the network (S21), the monitoring program product stored only in the proper terminal device having the connection authority to the network is activated (S22), and the predetermined connection startup notification is transmitted to the network management server (S23). The connection startup notification is generated by the monitoring program product stored only in the proper terminal device having the connection authority to the network, and transmitted as the data which cannot be generated unless the monitoring program product is provided by adopting a unique data format or adding a secret header. The network management server which has received the connection startup notification determines whether the connection of the terminal device is permitted in accordance with the flow described above.

If the connection to the network is permitted by the network management server, it is monitored the performance of the predetermined operation which may be the unauthorized operation such as spoofing by changing the IP address or the like (S24, S25). While the monitoring is continued if the predetermined operation is not performed, the notification of occurrence of abnormality at the terminal device is transmitted to the network management server if it is detected that the predetermined operation is performed (S26). The network management server which has received the notification acknowledges that the unauthorized operation may be performed, and performs processing for such as disconnecting the terminal device from the network. Note that, if it is detected that the predetermined operation is performed, the action such as prohibition to use the network may be performed.

Referring to the flow chart of FIG. 11, there is described the flow of the monitoring program product of the terminal device side transmitting the scheduled correspondence to the network management server during being connected to the network. First, when the terminal device is activated to perform the connection processing to the network (S31), the monitoring program product stored only in the proper terminal device having the connection authority to the network is activated (S32), and the predetermined connection startup notification is transmitted to the network management server (S33). The connection startup notification is generated by the monitoring program product stored only in the proper terminal device having the connection authority to the network, and transmitted as the data which cannot be generated unless the monitoring program product is provided by adopting the unique data format or adding the secret header. The network management server which has received the connection startup notification determines whether the connection of the terminal device is permitted in accordance with the flow described above.

The terminal device counts a predetermined passage of time from the transmission of the connection startup notification to scheduled time and, when the scheduled time comes, acquires the current connection information, such as the IP address, of the terminal device (S34). While the connection information is transmitted as the scheduled correspondence to the network management server at the predetermined timing (S35), the scheduled correspondence is generated by the monitoring program product stored only in the proper terminal device having the connection authority to the network, and transmitted as the data which cannot be generated unless the monitoring program product is provided by adopting the unique data format or adding the secret header. The network management server which has received the scheduled correspondence determines whether continuation of the connection of the terminal device is permitted in accordance with the flow described above.

If the network management server determines that the continuation of the connection of the terminal device is not permitted from the transmitted scheduled correspondence, the terminal device is disconnected from the network. If the disconnection from the network is performed (S36), the monitoring program product of the terminal device is halted as well (S37). In contrast, if the network management server determines that the continuation of the connection of the terminal device is permitted, the disconnection from the network is not performed (S36) and a standby status for the scheduled correspondence is continued.

### BRIEF DESCRIPTION OF DRAWINGS

FIG. 1 illustrates an example of a setup of an unauthorized connection detection system according to the present invention;
FIG. 2 is a block diagram illustrating a configuration of a network management server and a terminal device used for the unauthorized connection detection system according to the present invention;
FIG. 3 illustrates an example of notification record from a proper terminal recorded on the unauthorized connection detection system according to the present invention;
FIG. 4 illustrates an example of operation of the management server when a proper terminal device having connection authority is connected in the unauthorized connection detection system according to the present invention;
FIG. 5 illustrates a first example of the operation of the management server when the unauthorized terminal device having the connection authority is connected in the unauthorized connection detection system according to the present invention;
FIG. 6 illustrates a second example of the operation of the management server when the unauthorized terminal device without having the connection authority is connected in the unauthorized connection detection system according to the present invention;
FIG. 7 is a flow chart illustrating a flow of the management server when the terminal is activated in the unauthorized connection detection method according to the present invention;
FIG. 8 is a flow chart illustrating a first monitoring flow of the management server that receives scheduled correspondence from the terminal in the unauthorized connection detection method according to the present invention;
FIG. 9 is a flow chart illustrating a second monitoring flow of the management server that receives the scheduled correspondence from the terminal in the unauthorized connection detection method according to the present invention;
FIG. 10 is a flow chart illustrating a first flow of a monitoring program product of a terminal side in the unauthorized connection detection method according to the present invention; and
FIG. 11 is a flow chart illustrating a second flow of the monitoring program product of the terminal side in the unauthorized connection detection method according to the present invention.

### EXPLANATIONS OF LETTERS AND NUMERALS

10: network management server 101: CPU 102: RAM 103: ROM 104: HDD 105: NIC 11: terminal information storage 20: router 30: terminal device 301: CPU 302: RAM 303: ROM 304: HDD 305: NIC 31: monitoring program product 40: terminal device 41: monitoring program product 50: terminal device

## Claims

1. An unauthorized connection detection system for detecting an unauthorized connection to a network of a terminal device without having connection authority, wherein a proper terminal device having the connection authority to the network has a monitoring program product stored therein for transmitting a connection startup notification, indicating that the connection to the network is started, to the unauthorized connection detection system when the terminal device is connected to the network, the system comprising:
connected terminal detection means for detecting the terminal device connected to the network;
connection startup notification reception means for receiving the connection startup notification transmitted from the monitoring program product stored in the proper terminal device;
unauthorized connection determination means for, as to the terminal device detected to be newly connected to the network by the connected terminal detection means, determining that the terminal device is unauthorizedly connected to the network if the connection startup notification reception means does not receive the connection startup notification from the terminal device; and
packet transmission means for, as to the terminal device determined to be unauthorizedly connected by the unauthorized connection determination means, transmitting a packet for inhibiting communication to the terminal device or a separate terminal device serving as a communication partner of the terminal device, or a packet for interrupting a session between the terminal device and the separate terminal device serving as the communication partner of the terminal device.

2. The unauthorized connection detection system according to claim 1, comprising:
terminal information storing means for, as to the proper terminal device, storing first terminal information on at least one of proper identification information on the terminal device and information on a proper connection status to the network of the terminal device; and
terminal information detection means for detecting second terminal information on at least one of the identification information on the terminal device and the information on the connection status to the network of the terminal device from the connection startup notification received by the connection startup notification reception means,
wherein the monitoring program product detects and transmits current information on the terminal device to the unauthorized connection detection system as the connection startup notification, as to at least one of the identification information on the terminal device and the information on the connection status to the network of the terminal device,
wherein the unauthorized connection determination means determines that the terminal device is unauthorizedly connected to the network if the second terminal information detected by the terminal information detection means does not correspond to the first terminal information on the terminal device stored in the terminal information storing means.

3. An unauthorized connection detection system for detecting an unauthorized connection to a network of a terminal device without having connection authority, wherein a proper terminal device having the connection authority to the network has a monitoring program product stored therein for transmitting information on the terminal device to the unauthorized connection detection system at predetermined intervals when the terminal device is connected to the network, the system comprising:
connected terminal detection means for detecting the terminal device connected to the network;
terminal information reception means for receiving the information on the terminal device transmitted from the monitoring program product stored in the proper terminal device;
unauthorized connection determination means for, as to the terminal device detected to be connected to the network by the connected terminal detection means, determining that the terminal device is unauthorizedly connected to the network if the terminal information reception means does not receive the information on the terminal device at the predetermined intervals set up in the monitoring program product; and
packet transmission means for, as to the terminal device determined to be unauthorizedly connected by the unauthorized connection determination means, transmitting a packet for inhibiting communication to the terminal device or a separate terminal device serving as a communication partner of the terminal device, or a packet for interrupting a session between the terminal device and the separate terminal device serving as the communication partner of the terminal device.

4. The unauthorized connection detection system according to claim 3, comprising:
terminal information storing means for, as to the proper terminal device, storing first terminal information on at least one of proper identification information on the terminal device and information on a proper connection status to the network of the terminal device; and
terminal information detection means for detecting second terminal information on at least one of the identification information on the terminal device and the information on the connection status to the network of the terminal device from the information on the terminal device received by the terminal information reception means,
wherein the monitoring program product detects and transmits current information on the terminal device to the unauthorized connection detection system as the information on the terminal device, as to at least one of the identification information on the terminal device and the information on the connection status to the network of the terminal device,
wherein the unauthorized connection determination means determines that the terminal device is unauthorizedly connected to the network if the second terminal information detected by the terminal information detection means does not correspond to the first terminal information on the terminal device stored in the terminal information storing means.

5. The unauthorized connection detection system according to any one of claims 1 to 4, wherein
the monitoring program product stored in the proper terminal device transmits an occurrence notification of an event to the unauthorized connection detection system when a predetermined event defined to be unauthorized operation is detected,
the unauthorized connection detection system comprises occurrence notification reception means for receiving the occurrence notification of the event transmitted from the monitoring program product stored in the proper terminal device;
the unauthorized connection determination means determines that the terminal device is unauthorizedly connected to the network if the occurrence notification reception means receives the occurrence notification.

6. An unauthorized connection detection system for detecting an unauthorized connection to a network of a terminal device without having connection authority, wherein a proper terminal device having the connection authority to the network has a monitoring program product stored therein for returning a predetermined response to a request from the unauthorized connection detection system, the system comprising:
connected terminal detection means for detecting the terminal device connected to the network;
request transmission means for transmitting the request to the terminal device detected to be connected to the network by the connected terminal detection means;
response reception means for receiving the response to the request transmitted from the monitoring program product stored in the proper terminal device;
unauthorized connection determination means for, as to the terminal device to which the request transmission means has transmitted the request, determining that the terminal device is unauthorizedly connected to the network if the response reception means does not receive the response to the request from the terminal device; and
packet transmission means for, as to the terminal device determined to be unauthorizedly connected by the unauthorized connection determination means, transmitting a packet for inhibiting communication to the terminal device or a separate terminal device serving as a communication partner of the terminal device, or a packet for interrupting a session between the terminal device and the separate terminal device serving as the communication partner of the terminal device.

7. The unauthorized connection detection system according to claim 6, comprising:
terminal information storing means for, as to the proper terminal device, storing first terminal information on at least one of proper identification information on the terminal device and information on a proper connection status to the network of the terminal device; and
terminal information detection means for detecting second terminal information on at least one of the identification information on the terminal device and the information on the connection status to the network of the terminal device from the response received by the response reception means,
wherein the monitoring program product detects and transmits current information on the terminal device to the unauthorized connection detection system as the response, as to at least one of the identification information on the terminal device and the information on the connection status to the network of the terminal device;
wherein the unauthorized connection determination means determines that the terminal device is unauthorizedly connected to the network if the second terminal information detected by the terminal information detection means does not correspond to the first terminal information on the terminal device stored in the terminal information storing means.

8. An unauthorized connection detection method for detecting an unauthorized connection to a network of a terminal device without having connection authority, comprising the steps of:
activating connection processing to the network by a proper terminal device having the connection authority to the network;
transmitting a connection startup notification, indicating that the connection to the network is started, to a management server of the network when the proper terminal device establishes the connection to the network;
detecting the terminal device newly connected to the network by the management server;
determining that the new terminal device is unauthorizedly connected to the network if the management server does not receive the connection startup notification within a predetermined period of time after detecting that the new terminal device is connected to the network; and
transmitting a packet for inhibiting communication to the terminal device or a separate terminal device serving as a communication partner of the terminal device, or a packet for interrupting a session between the terminal device and the separate terminal device serving as the communication partner of the terminal device, as to the terminal device determined to be unauthorizedly connected at the step above.

9. An unauthorized connection detection method for detecting an unauthorized connection to a network of a terminal device without having connection authority, comprising the steps of:
activating connection processing to the network by a proper terminal device having the connection authority to the network;
transmitting information on the terminal device at predetermined intervals to a management server of the network when the proper terminal device establishes the connection to the network;
detecting the terminal device connected to the network by the management server;
determining that the new terminal device is unauthorizedly connected to the network if the management server does not receive the information on the terminal device at the predetermined intervals, as to the terminal device detected to be connected to the network by the management server; and
transmitting a packet for inhibiting communication to the terminal device or a separate terminal device serving as a communication partner of the terminal device, or a packet for interrupting a session between the terminal device and the separate terminal device serving as the communication partner of the terminal device, as to the terminal device determined to be unauthorizedly connected at the step above.

10. An unauthorized connection detection method for detecting an unauthorized connection to a network of a terminal device without having connection authority, comprising the steps of:
detecting the terminal device connected to the network by a management server of the network;
transmitting a predetermined request to the terminal device detected to be connected to the network by the management server;
activating a monitoring program product for receiving the request and transmitting a response to the request by a proper terminal device having the connection authority to the network connected to the network;
transmitting the response generated by the monitoring program product to the management server by the proper terminal device;
determining that the new terminal device is unauthorizedly connected to the network if the management server does not receive the response within a predetermined period of time, as to the terminal device to which the management server has transmitted the request; and
transmitting a packet for inhibiting communication to the terminal device or a separate terminal device serving as a communication partner of the terminal device, or a packet for interrupting a session between the terminal device and the separate terminal device serving as the communication partner of the terminal device, as to the terminal device determined to be unauthorizedly connected at the step above.

## Amended claims

### Amended claims under Art. 19.1 PCT

**1.** An unauthorized connection detection system for detecting an unauthorized connection to a network of a terminal device without having connection authority, wherein a proper terminal device having the connection authority to the network has a monitoring program product stored therein for transmitting a connection startup notification, indicating that the connection to the network is started, to the unauthorized connection detection system and for transmitting information on the terminal device to the unauthorized connection detection system at predetermined intervals when the terminal device is connected to the network, the system comprising:
connected terminal detection means for detecting the terminal device connected to the network;
connection startup notification reception means for receiving the connection startup notification transmitted from the monitoring program product stored in the proper terminal device;
first unauthorized connection determination means for, as to the terminal device detected to be newly connected to the network by the connected terminal detection means, verifying whether the connection startup notification reception means has received the connection startup notification from the terminal device, and determining that the terminal device is unauthorizedly connected to the network if the connection startup notification has not been received;
terminal information reception means for receiving the information on the terminal device transmitted from the monitoring program product stored in the proper terminal device;
second unauthorized connection determination means for, as to the terminal device detected to be connected to the network by the connected terminal detection means, verifying whether the terminal information reception means has received the information on the terminal device at predetermined intervals set up in the monitoring program product, and determining that the terminal device is unauthorizedly connected to the network if the information on the terminal device has not received at the predetermined intervals; and
packet transmission means for, as to the terminal device determined to be unauthorizedly connected by the first unauthorized connection determination means or the second unauthorized connection determination means, transmitting a packet for inhibiting communication to the terminal device or a separate terminal device serving as a communication partner of the terminal device, or a packet for interrupting a session between the terminal device and the separate terminal device serving as the communication partner of the terminal device.

**2.** The unauthorized connection detection system according to claim 1, comprising
terminal information storing means for, as to the proper terminal device, storing first terminal information on at least one of proper identification information on the terminal device and information on a proper connection status to the network of the terminal device, and
terminal information detection means for detecting second terminal information on at least one of the identification information on the terminal device and the information on the connection status to the network of the terminal device from the connection startup notification received by the connection startup notification reception means,
wherein the monitoring program product detects and transmits current information on the terminal device to the unauthorized connection detection system as the connection startup notification, as to at least one of the identification information on the terminal device and the information on the connection status to the network of the terminal device,
wherein the first unauthorized connection determination means determines that the terminal device is unauthorizedly connected to the network if the second terminal information detected by the terminal information detection means does not correspond to the first terminal information on the terminal device stored in the terminal information storing means.

**3.** The unauthorized connection detection system according to claim 1, comprising
the terminal information storing means for, as to the proper terminal device, storing the first terminal information on at least one of the proper identification information on the terminal device and the information on the proper connection status to the network of the terminal device, and
the terminal information detection means for detecting the second terminal information on at least one of the identification information on the terminal device and the information on the connection status to the network of the terminal device from the information on the terminal device received by the terminal information reception means,
wherein the monitoring program product detects and transmits the current information on the terminal device to the unauthorized connection detection system as the information on the terminal device, as to at least one of the identification information on the terminal device and the information on the connection status to the network of the terminal device,
wherein the second unauthorized connection determination means determines that the terminal device is unauthorizedly connected to the network if the second terminal information detected by the terminal information detection means does not correspond to the first terminal information on the terminal device stored in the terminal information storing means.

**4.** The unauthorized connection detection system according to any one of claims 1 to 3, wherein the monitoring program product stored in the proper terminal device transmits an occurrence notification of an event to the unauthorized connection detection system when a predetermined event defined to be unauthorized operation is detected, the unauthorized connection detection system comprising
occurrence notification reception means for receiving the occurrence notification of the event transmitted from the monitoring program product stored in the proper terminal device, and
third unauthorized connection determination means for, as to the terminal device detected to be connected to the network by the connected terminal detection means, determining that the terminal device is unauthorizedly connected to the network if the occurrence notification reception means receives the occurrence notification,
wherein the packet transmission means transmits the packet for inhibiting the communication to the terminal device or the separate terminal device serving as the communication partner of the terminal device, or the packet for interrupting the session between the terminal device and the separate terminal device serving as the communication partner of the terminal device, as to the terminal device determined to be unauthorizedly connected by the third unauthorized connection determination means.

**5.** An unauthorized connection detection method for detecting an unauthorized connection to a network of a terminal device without having connection authority, comprising:
the step of activating connection processing to the network by a proper terminal device having the connection authority to the network;
the step of transmitting a connection startup notification, indicating that the connection to the network is started, to a management server of the network when the proper terminal device establishes the connection to the network;
the step of detecting the terminal device connected to the network by the management server;
the first determination step of verifying whether the connection startup notification has been received as to the terminal device detected to be newly connected to the network at the terminal detection step, and determining that the terminal device is unauthorizedly connected to the network if the connection startup notification has not been received;
the step of transmitting information on the terminal device at predetermined intervals to the management server of the network after the proper terminal device has established the connection to the network;
the second determination step of verifying whether the information on the terminal device has been received at the predetermined intervals set up in the proper terminal device as to the terminal device detected to be newly connected to the network at the terminal detection step, and determining that the terminal device is unauthorizedly connected to the network if the information on the terminal device has not been received at the predetermined intervals; and
the step of transmitting a packet for inhibiting communication to the terminal device or a separate terminal device serving as a communication partner of the terminal device, or a packet for interrupting a session between the terminal device and the separate terminal device serving as the communication partner of the terminal device, as to the terminal device determined to be unauthorizedly connected at the first determination step or the second determination step.

**6.** The unauthorized connection detection method according to claim 5, wherein, at the step of transmitting the connection notification, the proper terminal device detects and transmits current information on the proper terminal device to the management server as the connection startup notification, as to at least one of identification information on the terminal device and information on a connection status to the network of the terminal device, the method comprising
the step of detecting second terminal information on at least one of the identification information on the new terminal device and the information on the connection status to the network of the new terminal device from the connection startup notification by the management server, and
the third determination step of determining that the new terminal device is unauthorizedly connected to the network by the management server if the second terminal information does not correspond to first terminal information stored in a terminal information storage which stores the first terminal information, as to the proper terminal device, on at least one of the proper identification information on the terminal device and the information on the proper connection status to the network of the terminal device,
wherein, at the step of transmitting the packet, the packet for inhibiting the communication to the terminal device or the separate terminal device serving as the communication partner of the terminal device, or the packet for interrupting the session between the terminal device and the separate terminal device serving as the communication partner of the terminal device, as to the terminal device determined to be unauthorizedly connected at the third determination step.

**7.** The unauthorized connection detection method according to claim 5, wherein, at the step of transmitting the information on the terminal device, the proper terminal device detects and transmits the current information on the proper terminal device to the management server as the information on the terminal device, as to at least one of the identification information on the terminal device and the information on the connection status to the network of the terminal device, the method comprising
the step of detecting the second terminal information on at least one of the identification information on the new terminal device and the information on the connection status to the network of the new terminal device from the information on the terminal device by the management server, and
the fourth determination step of determining that the new terminal device is unauthorizedly connected to the network by the management server if the second terminal information does not correspond to the first terminal information stored in the terminal information storage which stores the first terminal information, as to the proper terminal device, on at least one of the proper identification information on the terminal device and the information on the proper connection status to the network of the terminal device,
wherein, at the step of transmitting the packet, the packet for inhibiting the communication to the terminal device or the separate terminal device serving as the communication partner of the terminal device, or the packet for interrupting the session between the terminal device and the separate terminal device serving as the communication partner of the terminal device, as to the terminal device determined to be unauthorizedly connected at the fourth determination step.

**8.** The unauthorized connection detection method according to any one of claims 5 to 7, comprising
the step of detecting, by the proper terminal device, a predetermined event defined as unauthorized operation at the proper terminal device,
the step of transmitting an occurrence notification of the event to the management server when the proper terminal device detects the predetermined event, and
the fifth determination step of determining that the terminal device is unauthorizedly connected to the network by the management server if the occurrence notification is received as to the terminal device detected to be newly connected to the network at the terminal detection step,
wherein, at the step of transmitting the packet, the packet for inhibiting the communication to the terminal device or the separate terminal device serving as the communication partner of the terminal device, or the packet for interrupting the session between the terminal device and the separate terminal device serving as the communication partner of the terminal device, as to the terminal device determined to be unauthorizedly connected at the fifth determination step.
